Europäisches Patentamt

European Patent Office

Office européen des brevets

(11) Publication number: **0 070 403**
**B1**

## (12) EUROPEAN PATENT SPECIFICATION

(45) Date of publication of patent specification: **10.04.85**

(51) Int. Cl.⁴: **A 47 J 31/24, A 47 J 31/40**

(21) Application number: **82105519.1**

(22) Date of filing: **23.06.82**

(54) **Express coffee machine.**

(30) Priority: **16.07.81 IT 2237681 U**

(43) Date of publication of application:
**26.01.83 Bulletin 83/04**

(45) Publication of the grant of the patent:
**10.04.85 Bulletin 85/15**

(84) Designated Contracting States:
**AT BE CH DE FR GB LI LU NL SE**

(56) References cited:
**EP-A-0 006 175**
**CH-A- 162 960**
**CH-A- 434 609**
**CH-A- 458 099**
**CH-A- 503 630**
**DE-C- 573 054**
**FR-A- 757 358**

(73) Proprietor: **ILLYCAFFE S.p.A.**
**Via Flavia, 110**
**I-34147 Trieste (IT)**

(72) Inventor: **Illy, Ernesto**
**8, Via Locchi**
**I-34123 Trieste (IT)**

(74) Representative: **Ferraiolo, Ruggero**
**Viale Tunisia, 29**
**I-20124 Milano (IT)**

Courier Press, Leamington Spa, England.

## Description

This invention relates to an express coffee machine.

The conventional coffee machines, like the express machines of Italian style used in a bar or in a coffee shop, are adapted to brew coffee by passing hot water through a pad of ground coffee conveniently prepared by an operator in a certain container comprising a filter (that will be referred to as "container" only).

It is known that ground coffee is also put onto the market in the form of prefabricated pods each defining one measure of coffee formed under pressure within two layers of water permeable paper. Said pods are such that they can not be used in said conventional coffee machines. In fact, the features of said pods do not fit the above container, on the contrary, said pods are suitable for an extraction chamber made for the purpose, for instance, as disclosed by the applicant in EP—A—0006175.

The invention as claimed is intended to allow prefabricated coffee pods to be used in a conventional express coffee machine. Accordingly, a conventional express coffee machine (that will be referred to as "machine" only) is provided according to the invention with the features of claim 1. So, hot water produced by a known way in the machine is made to enter a passage and a diffuser in the adapter, to arrive and spread in the upper part of the extraction chamber, to pass through the coffee pod, whereby a coffee is brewed, and through the filter and, finally, to run off through a delivery nozzle.

The adapter comprises means that allow it to be applied to and removed from the water distributor in the machine, said means being identical with those that said container comprises to the same purpose. Both the adapter and the box are provided with a handle for manipulating them.

The advantages of the invention reside in that a conventional express machine is adapted to work as such, namely by using loose ground coffee and alternatively, it may be converted in a machine adapted to brew coffee from coffee pods; also the invented machine allows to offer single coffee beverages of particular features, for instance caffeine-free, if an operator has a pod of such coffee on hand. One way of carrying out the invention is described in details herebelow with reference to the drawings which illustrate only a specific embodiment, in which:

FIG. 1 is a vertical cross section of an adapter installed on a conventional coffee machine, and

FIG. 2 is a vertical cross section of the adapter, of a box applied thereto and of a coffee pod in the extraction chamber.

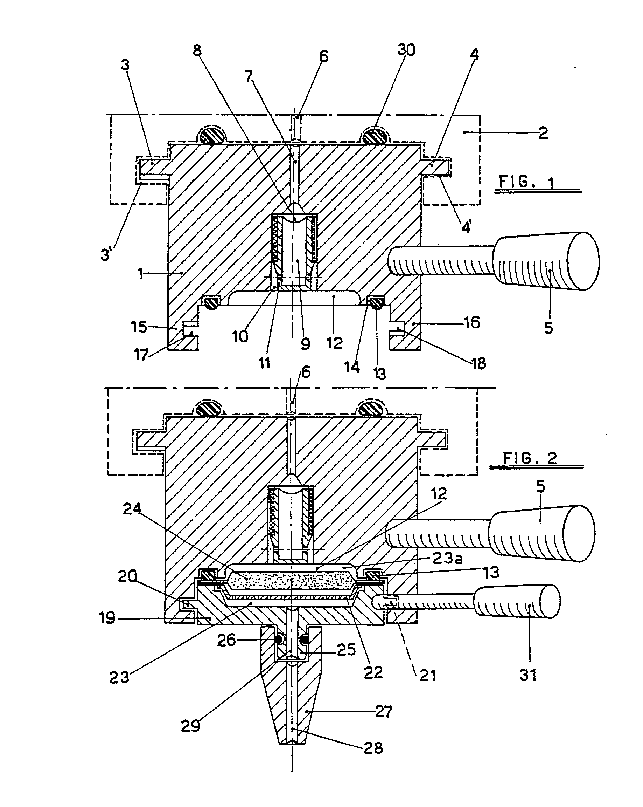

According to Fig. 1, an adapter 1 is applied to the hot water distributor of a machine 2, indicated by broken lines and comprising a seal 30, by engaging the wings 3, 4 into respective slots 3', 4' existing in the machine for receiving said container. For ease of handling the adapter 1 is provided with a handle 5.

A vertical passage 7 in the adapter faces a passage 6 in the hot water distributor in the machine, the passage 7 enlarging at the bottom so as to define a cylindrical chamber 8 bearing a screw thread which extends partly along the vertical wall thereof. In said screw thread a diffuser 9 is screwed, such that at the bottom it is spaced from the cylindrical wall of the chamber 8 to define a space 10 and that a plurality of radial openings 11 is arranged at the bottom of its side wall. A flat chamber 12 of circular cross section is defined in the lower part of the adapter, in communication and concentric with the chamber 8. A circular rubber seal 13 is partly housed in a circular seat 14 in the adapter 1. Extensions 15, 16 of the adapter are provided with slots 17, 18 which serve for applying a box 19 to the adapter.

According to Fig. 2, the box 19 is applied to the adapter 1 by the wings 20, 21 engaged with the slots 17, 18. In a depression or recess in the box 19 a filter 22 is received such that a chamber 23 is defined within the filter and the bottom surface of said depression or recess. A pod 24 is located in the extraction chamber 23a defined within the chamber 12 by the filter 22. The pod 24 has a circular peripheral edge portion constituted by the overlapped and connected edges of the overlying layers of water permeable filter paper; said edge portion is water-tightly clamped between the seal 13 and the flat upper surface of the box 19. A hollow extension 25 of box 19 projects downwardly therefrom and comprises a sealing ring 26 around which a nozzle 27 is engaged in such a way that the outlet passages 28 and 29 of the nozzle 27 and of the hollow extension 25, respectively, are coaxial and in communication with the chamber 23. The box 19 is provided with a handle 31.

In operation of a coffee machine fitted with the inventive structure as described above an operator applies the adapter 1 under the hot water distributor of the machine 2, places a pod 24 over the filter 22 in the box 19 and applies the box 19 to the adapter 1. The operator then operates the machine in the normal manner, so that hot water is delivered which passes from passage 6 into passage 7 diffuser 9, flows out through openings 11, spreads through chamber 12 and penetrates through pod 24. Coffee is thus brewed which passes through the filter 22 and runs off through the outlet passages 28 and 29.

## Claims

1. An express coffee machine which brews coffee by passing hot water through a pad of ground coffee and having a hot water distributor with attachment means (3', 4') for a coffee container characterised in that the machine is provided with a removable adapter (1) which is adapted to be attached under the hot water distributor of the machine, the adapter (1) being also adapted to receive attachably and removably a box (19) comprising a filter (22) that, associated with the adapter (1), defines an extraction chamber (23a) into which a prefabricated coffee pod (24) may be housed before securing the box (19) to the adapter (1), wherein the adapter (1) comprises: means (3, 4) adapted to attach the adapter (1) to the hot water distributor in the machine, such means being correspondent with the means (3', 4') in the machine for the attachment of a conventional coffee container; a passage (7) facing the hot water delivery passage (6) in the machine; a first substantially cylindrical chamber (8) in communication with said passage (7); a hot water diffuser (9), housed in the first chamber (8), provided with a plurality of openings (11) for passing the hot water from the diffuser (9) to a second substantially circular and flat chamber (12) defined in the lower part of the adapter (1); means (17, 18) adapted to receive engaging means (20, 21) of the box (19) and a seal (13) around said second chamber (21) for making water-tight the engagement of the adapter (1) with the box (19).

2. An express coffee machine according to claim 1 characterised in that the adapter (1) comprises also a handle (5) for manipulating the same adapter (1) and the box (19) comprises: means (20, 21) adapted to apply the box (19) to the adapter (1); a filter (22) housed in a peripheral seat of a recess in the box (19); a hollow extension (25) projecting downwardly from the box (19) provided with an outlet passage (29) for communicating said recess with the outside; a nozzle (27) adapted to engage with the hollow extension (25), provided with an outlet passage (28) facing the outlet passage (29) in the hollow extension (25) and a handle (31) for manipulating the box (19).

3. An express coffee machine according to claims 1 and 2 characterised in that the plurality of openings (11) in the diffuser (9) are in radial direction at the bottom of the side wall of the diffuser (9) and that within said diffuser (9) and the lower part of said first chamber (8) there is defined a space (10) through which the water passes to said second chamber (12).

**Revendications**

1. Machine à café express qui fait infuser du café en faisant passer de l'eau chaude à travers un gâteau de café moulu et présentant un distributeur d'eau chaude avec des moyens de fixation (3', 4') destinés à un récipient à café, caractérisée par le fait qu'elle est munie d'un adaptateur amovible (1) qui est conçu pour se fixer sous le distributeur d'eau chaude de la machine, l'adaptateur (1) étant aussi conçu pour recevoir, avec possibilité de fixation et de retrait, une boîte (19) comprenant un filtre (22) qui, associé à l'adaptateur (1), définit une chambre d'extraction (23a) dans laquelle on peut, avant de fixer la boîte (19) à l'adaptateur (1), loger un gâteau préfabriqué (24) de café moulu, machine dans laquelle l'adaptateur (1) comprend: des moyens (3, 4) conçus pour sa fixation au distributeur d'eau de la machine, ces moyens correspondant aux moyens (3', 4') prévus dans la machine pour la fixation d'un récipient à café classique; un passage (7) placé en face du passage d'amenée d'eau chaude (6) de la machine; une première chambre pratiquement cylindrique (8) en communication avec le passage (7); un diffuser d'eau chaude (9) logé dans la première chambre (8), muni de multiples ouvertures (11) pour faire passer l'eau chaude du diffuseur (9) à une deuxième chambre (12) pratiquement circulaire et plate définie dans la partie inférieure de l'adaptateur (1); des moyens (17, 18) conçus pour recevoir des moyens d'engagement (20, 21) de la boîte (19) et un joint (13) autour de la deuxième chambre (21) pour rendre étanche l'accouplement de l'adaptateur (1) à la boîte (19).

2. Machine à café express selon la revendication 1, caractérisée par le fait que l'adaptateur (1) comprend aussi une poignée (5) pour sa manipulation et que la boîte (19) comprend: des moyens (20, 21) conçus pour appliquer la boîte (19) à l'adaptateur (1); un filtre (22) logé dans un siège périphérique d'un évidement de la boîte (19); un prolongement creux (25) dépassant de la boîte (19) vers le bas, muni d'un passage de sortie (29) pour faire communiquer l'évidement avec l'extérieur; une buse (27) conçue pour s'appliquer au prolongement creux (25), munie d'un passage de sortie (28) placé en face du passage de sortie (29) du prolongement creux (25), et une poignée (31) pour manipuler la boîte (19).

3. Machine à café express selon les revendications 1 et 2, caractérisée par le fait que les multiples ouvertures (11) du diffuseur (9) sont en direction radiale en bas de la paroi latérale du diffuseur (9) et qu'à l'intérieur dudit diffuseur (9) et de la partie inférieure de la première chambre (8) est défini un espacement (10) à travers laquelle l'eau se rend à la deuxième chambre (12).

**Patentansprüche**

1. Espresso-Kaffeemaschine zum Filtern von Kaffee mittels heißem Wasser, das in ein Filter gepreßten gemahlenen Kaffee passiert und die einen Heißwasserverteiler mit Befestigungselementen für einen Filterbehälter aufweist, dadurch gekennzeichnet, daß die Espressomaschine mit einem abnehmbaren Adapter (1) ausgestattet ist, der unter dem Heißwasserverteiler der Maschine befestigbar ist und außerdem einen daran befestigbaren und abnehmbaren Behälter (19) aufnimmt, der einen Filter (22) enthält, welcher zusammen mit dem Adapter (1) eine Extraktionskammer (23a) bildet, in die vor der Befestigung des Behälters (19) am Adapter (1) ein vorfabrizierter Kaffeebeutel (24) einlegbar ist, wobei der Adapter (1) Befestigungselemente (3, 4) zu seiner Befestigung am Heißwasserverteiler der Maschine aufweist, die mit Befestigungselementen (3', 4') der Maschine zur Aufnahme eines konventionellen Filterhalters zusammenwirken, weiters eine Leitung (7) fluchtend mit der Heißwasser zuleitung (6) der Maschine, ein erste im wesentlichen zylindrische Kammer (8) in Verbindung mit der Leitung (7), einen Diffusor (9) für das Heißwasser, angebracht in der ersten Kammer (8), der mit einer Vielzahl von Öffnungen (11) ausgestattet ist, durch die das Heißwasser aus dem Diffusor (9) in eine zweite im wesentlichen kreisförmige und flache Kammer (12), angebracht im unteren Teil des Adapters, strömt, Befestigungselemente (17, 18), die in sie einrastende Elemente (20, 21) des Behälters (19) aufnehmen und eine Dichtung (13), die kreisförmig um die zweite Kammer (12) angebracht ist, um eine wasserdichte Verbindung zwischen Adapter (1) und Behälter (19) herzustellen.

2. Espresso-Kaffeemaschine nach Anspruch 1, dadurch gekennzeichnet, daß der Adapter (1) außerdem einen Griff (5) zu seiner Handhabung aufweist und der Behälter (19) mit Befestigungselementen (20, 21) zu seiner Befestigung am Adapter (1), einem Filter (22), angebracht in einer peripheren Auflage einer Ausdrehung im Behälter (19), ausgestattet ist, sowie mit einem nach unten weisenden hohlen Ansatz (25), der einen Auslaß (29) aufweist, der die Verbindung der Ausdrehung mit der Außenseite herstellt, mit einem Ausguß (27), der mit dem hohlen Ansatz (25) im Eingriff steht, ausgestattet mit einem mit dem Auslaß (29) im hohlen Ansatz (25) fluchtenden Auslaß (28) und mit einem Griff (31) zur Handhabung des Behälters (19).

3. Espresso-Kaffeemaschine nach den Ansprüchen 1 und 2, dadurch gekennzeichnet, daß die Vielzahl von Öffnungen (11) im Diffusor (9) in radialer Richtung am unteren Ende seiner Seitenwand angebracht sind und daß vom Diffusor (9) und dem unteren Teil der ersten Kammer (8) ein Raum (10) definiert ist, durch den das Wasser in die zweite Kammer (12) gelangt.

0 070 403

FIG. 1

FIG. 2

1